(19) Europäisches Patentamt
European Patent Office
Office européen des brevets

(11) **EP 1 462 633 B1**

(12) **EUROPÄISCHE PATENTSCHRIFT**

(45) Veröffentlichungstag und Bekanntmachung des Hinweises auf die Patenterteilung:
**30.10.2013 Patentblatt 2013/44**

(51) Int Cl.:
*F02C 7/143* (2006.01) *F02C 9/16* (2006.01)
*F02C 9/28* (2006.01) *F01D 17/08* (2006.01)

(21) Anmeldenummer: **03022209.5**

(22) Anmeldetag: **30.09.2003**

(54) **Verfahren zur Regelung der Heissgastemperatur einer Gasturbine**

Method of controlling the hot gas temperature of a gas turbine

Procédé de réglage de la température de gaz chaud d'une turbine à gaz

(84) Benannte Vertragsstaaten:
**AT BE BG CH CY CZ DE DK EE ES FI FR GB GR HU IE IT LI LU MC NL PT RO SE SI SK TR**

(30) Priorität: **28.03.2003 DE 10314389**

(43) Veröffentlichungstag der Anmeldung:
**29.09.2004 Patentblatt 2004/40**

(73) Patentinhaber: **Siemens Aktiengesellschaft
80333 München (DE)**

(72) Erfinder:
• **Nuding, Joachim-René
40885 Ratingen (DE)**
• **Leusden, Christoph Pels, Dr.
45468 Mülheim (DE)**
• **Tappen, Marco, Dr.
45472 Mülheim (DE)**

(56) Entgegenhaltungen:
**EP-A- 1 203 866 EP-A- 1 231 369
US-A1- 2002 083 712 US-B1- 6 357 236**

EP 1 462 633 B1

**Beschreibung**

Die Erfindung betrifft ein Verfahren zur Regelung der Heißgastemperatur einer Gasturbine gemäß dem Oberbegriff der Ansprüche 1 bzw. 2.

Es ist bekannt, dass stationäre Gasturbinen zur Erzeugung von mechanischer Energie eingesetzt werden, die mittels eines Generators meist in elektrische Energie umgewandelt wird. In der Gasturbine wird dazu ein fossiler Brennstoff mit einem von dem Verdichter verdichteten Luftstrom zu einem Heißgas verbrannt, das sich anschließend in einer Turbine am Rotor arbeitsleistend entspannt. Die Gasturbine wird dabei so betrieben, dass ausreichend Energie an der Rotorwelle zur Erzeugung der elektrischen Energie abgegeben wird, wobei eine maximale Temperatur des Heißgases am Turbineneintritt nicht überschritten werden soll.

Die Turbineneintrittstemperatur ist aufgrund ihrer hohen Werte nicht unmittelbar messbar. Daher wird die am Turbinenaustritt herrschende Temperatur des Abgases erfasst, aus der sich dann die Turbineneintrittstemperatur rechnerisch bestimmen lässt. Über die Menge des in die Brennkammer eingebrachten Brennstoffs ist die Turbinenaustrittstemperatur und somit indirekt auch die Turbineneintrittstemperatur regelbar, wobei diese auch von der Temperatur der Luft am Verdichtereintritt abhängig sind. Zur Vereinfachung der Regelung der Gasturbine wird eine Hilfsgröße mittels eines mathematischen Modells berechnet, bei welcher die Abhängigkeit der Turbinenaustrittstemperatur von der Verdichtereintrittstemperatur  nicht mehr vorhanden ist. Diese Hilfsgröße wird als korrigierte Turbinenaustrittstemperatur bezeichnet. Sie ist lediglich von der Menge des verbrauchten Brennstoffs abhängig, so dass sich eine einfache Regelung der Gasturbine ergibt. Die Regelung ist zwar ferner von der Netzfrequenz des vom Generator erzeugten Stromes abhängig, jedoch bleibt dieser Einfluss hier unberücksichtigt.

Zur Leistungssteigerung der Gasturbine kann dem vom Verdichter angesaugten Luftstrom noch vor der Verdichtung Wasser zugeführt werden, um den Massenstrom durch die Gasturbine zu erhöhen. Dieser Betrieb ist allgemein als Wet-Compression-Betrieb oder als "Nasse Verdichtung" bekannt.

Die Temperatur der angesaugten Luft weicht regelmäßig von der Temperatur der eingedüsten Flüssigkeit ab. Da die am Eintritt des Verdichters angebrachten Temperaturmesseinrichtungen zur Messung der Lufttemperaturen von der eingebrachten Flüssigkeit benetzt werden, erfassen die Temperaturmesseinrichtungen nicht die Temperatur der Luft, sondern die der Flüssigkeit.

Wenn dann aufgrund einer nach der Messung scheinbar höheren Verdichtereintrittstemperatur eine niedrigere Turbinenaustrittstemperatur bestimmt wird als die tatsächlich vorhandene, erhöht der Regler der Gasturbine die Brennstoffzufuhr in die Brennkammer, um den vermeintlichen Unterschied zu kompensieren. Dabei wird jedoch die Gasturbine überfeuert, d.h. die tatsächliche Turbineneintrittstemperatur kann größer als die maximal erlaubte Turbineneintrittstemperatur werden. Die Gasturbine wird unterfeuert, wenn eine niedrigere Verdichtereintrittstemperatur gemessen wird als die tatsächliche.

Die Überfeuerung der Gasturbine kann zu einer Überhitzung der heißgasbeaufschlagten Komponenten und somit zu einer Verringerung ihrer Lebensdauer führen, oder auch zu Defekten. Dagegen führt die Unterfeuerung der Gasturbine zu einem Leistungsverlust.

Weiter ist aus der US 2002/083712 A1 eine Wassereinspritz-Regeleinrichtung für ein im Lufteinlasssystem einer Gasturbine bekannt. Das Kontrollsystem der Regeleinrichtung verändert und begrenzt die Wassereinspritzung basierend auf der Feuchtigkeit der angesaugten Luft, auf dem Taupunkt der Umgebungstemperatur, auf der Trockentemperatur der Umgebungsluft und/oder basierend auf dem Verdichtereinlassstroms. Eine Erfassung der Abgastemperatur der Gasturbine erfolgt nicht.

Die Aufgabe der Erfindung ist die Erzielung eines Verfahrens zur Regelung der Heißgastemperatur einer Gasturbine, bei dem im Wet-Compression-Betrieb die Lebensdauer der heißgasbeaufschlagten Komponenten erhöht und trotzdem eine größtmögliche Leistungsabgabe erreicht wird.

Die auf das Verfahren gerichtete Aufgabe wird durch die Merkmale der Ansprüche 1 bzw. 2 gelöst. Vorteilhafte Ausgestaltungen sind in den Unteransprüchen angegeben.

Die Lösung sieht vor, dass das Verfahren die Temperatur des Luftstromes am Eintritt des Verdichters mittels der gemessenen Lufttemperatur unter Berücksichtung der Evaporierung der eingedüsten Flüssigkeit im Luftstrom berechnet. Es wird ein Wirkungsgrad für die Evaporierung durch Berechnungen und/oder Versuche ermittelt, aus dem sich mit Hilfe der minimalen möglichen Temperatur die am Verdichtereintritt herrschende Lufttemperatur bestimmt wird. Mit dieser Regelung ist es möglich, sich die realen Bedingungen bezüglich der Verdunstung der eingebrachten Flüssigkeit auf dem Weg bis zum Verdichtereintritt abzubilden, und so einen sicheren und leistungsstärkeren Betrieb der Gasturbine herzustellen, der ein über- wie unterfeuern der Gasturbine vermeidet.

In einer vorteilhaften Weiterbildung ist die Feuchte des Luftstroms mittels Luftfeuchte-Messeinrichtungen vor der Eindüsvorrichtung bestimmbar. Durch die Kenntnis der Luftfeuchte und Lufttemperatur des angesaugten Luftstroms kann eine Verdunstung der eingebrachten Flüssigkeit auf dem Weg bis zu dem Verdichtereinritt bestimmt werden. Unter Einbeziehung der Luftfeuchte kann die Berechnung der Temperatur am Eintritt des Verdichters besonders genau erfolgen.

Wenn die Temperatur des Luftstroms am Verdichtereintritt mittels einer Funktion anhand von Lufttemperatur- und Feuchteverteilungen berechnet wird, ist diese besonders einfach möglich.

In einer vorteilhaften Weiterbildung sind die Lufttemperatur-und Feuchteverteilungen in Form von Diagrammen vorgebbar, so dass die Abhängigkeit der Verdunstung der eingedüsten Flüssigkeit im Luftstrom besonders einfach darstellbar ist. Dies trägt zu einer einfachen Berechnung bei.

In einer weiterer Ausgestaltung der Regelung wird mit einer 100%igen Evaporierung eine minimal mögliche Temperatur bestimmt, die als Ersatz für die Temperatur am Eintritt des Verdichters verwandt wird. Es wird dabei angenommen, dass die durch die Eindüsvorrichtung eingebrachte Flüssigkeit soweit verdampft, dass sich eine relative Luftfeuchte von 100% am Verdichtereintritt einstellt. Unter dieser Annahme kann in Verbindung mit der gemessenen Luftfeuchte und Lufttemperatur eine minimal erreichbare (kleinstmögliche) Temperatur am Verdichtereintritt bestimmt werden. Wird nun als Temperatur des Luftstromes am Eintritt des Verdichters die minimal mögliche Temperatur verwendet, so ist die tatsächlich herrschende Temperatur am Verdichtereintritt immer größer als die minimal mögliche Temperatur, da eine Luftfeuchte von 100% ohne äußere Einwirkungen nie erreicht wird. Für diesen Fall wird die Gasturbine immer unterfeuert. Ein Überhitzen der heißgasbeaufschlagten Komponenten wird somit vermieden, so dass die Lebensdauer der Komponenten nicht verringert wird.

Eine verbesserte Regelung der Gasturbine ergibt sich, wenn die Temperatur des Luftstroms am Eintritt des Verdichters unter Berücksichtigung der tatsächlichen Evaporierung der eingedüsten Flüssigkeit im Luftstrom berechnet wird.

In einer bevorzugten Ausgestaltung der Regelung wird die Menge der eingedüsten Flüssigkeit in den Luftstrom in Abhängigkeit der Evaporierung geändert. Üblicherweise sind die Verdichter von Gasturbinen für eine vorbestimmte Flüssigkeitsmenge dimensioniert, die während der Verdichtung verdampft. Durch die Evaporierung verdampft jedoch bereits vor der Verdichtung ein geringer Anteil der eingedüsten Flüssigkeit, so dass der Verdichter nicht im optimalen Bereich betrieben wird. Durch eine Anpassung der Menge der eingedüsten Flüssigkeit kann dieser Nachteil umgangen werden.

Der Wirkungsgrad der Evaporierung, der im wesentlichen von der Tröpfchencharakteristik sowie der Geometrie, d.h. von der räumlichen Anordnung der Komponenten eines Verdichters abhängig ist, kann aus Versuchen abgeschätzt und/oder Berechnungen ermittelt werden, die dann in Modellen oder Formeln im Regler hinterlegt werden. Durch das Vermeiden der Unterfeuerung wird die Leistungsausbeute der Gasturbine erhöht und durch das Verhindern der Überfeuerung der Gasturbine wird die Lebensdauer der heißgasführenden Komponenten nicht beeinträchtigt.

Die Vorteile der Regelung entsprechen sinngemäß den Vorteilen der Gasturbine.

Die Erfindung wird anhand einer Zeichnung erläutert. Dabei zeigt

Fig. 1     eine Gasturbinenanlage und

Fig. 2     ein Ansaughaus einer Gasturbine gemäß Fig. 1.

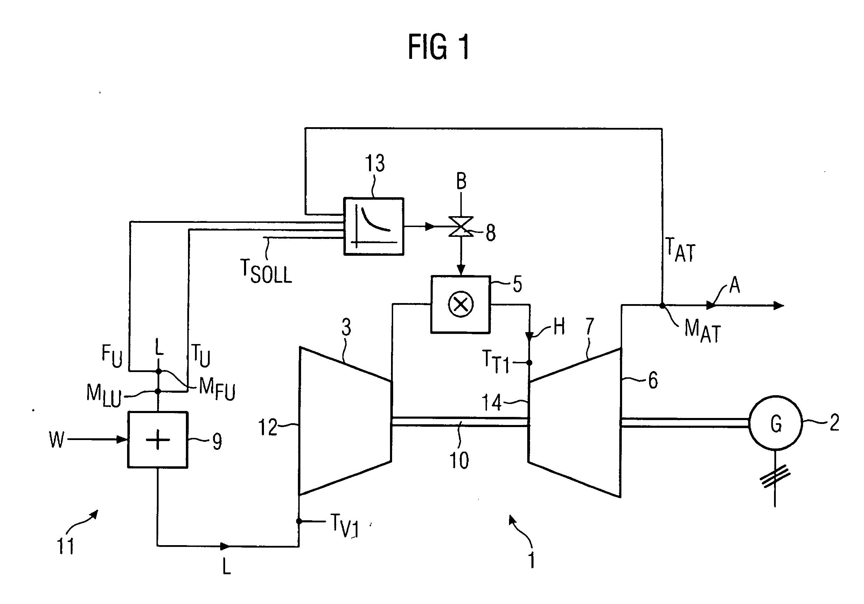

Fig. 1 zeigt schematisch eine Gasturbinenanlage zur Umwandlung fossiler Energie in elektrische Energie mittels einer Gasturbine 1 und eines daran angekoppelten Generators 2. Die stationäre Gasturbine 1 weist im wesentlichen einen Verdichter 3, eine Brennkammer 5 und ein Turbinenteil 7 auf. Der Verdichter 3 ist mit dem Turbinenteil 7 und dem Generator 2 über eine gemeinsame Rotorwelle 10 verbunden.

Beim Betrieb der Gasturbine 1 wird vom Verdichter 3 Luft durch ein Ansaughaus 11 angesaugt und verdichtet. Die verdichtete Luft wird in einem Brenner mit einem Brennmittel B, welches durch ein Absperrorgan 8 zuführbar ist, vermischt und der Brennkammer 5 zugeführt. Das Gemisch verbrennt beim Betrieb zu einem Heißgas H, welches anschließend in den Turbinenteil 7 hineinströmt. Dort entspannt sich das Heißgas H und treibt dabei die Rotorwelle 10 an. Danach verlässt das Heißgas H als Abgas A in einen nicht weiter dargestellten Abgaskanal die Gasturbine 1. Die Rotorwelle 10 treibt den Verdichter 3 als auch den Generator 2 an.

Zur Regelung des Betriebs der Gasturbine 1 wird die Temperatur $T_{AT}$ des Heißgases H am Austritt 6 des Turbinenteils 7 mittels einer Temperaturmesseinrichtung $M_{AT}$ überwacht, da die am Eintritt 14 des Turbinenteils 7 herrschende Temperatur $T_{T1}$ des Heißgases H nicht messbar ist. Über die Menge des eingebrachten Brennmittels B in die Brennkammer 5 kann sowohl die Leistung der Gasturbine 1 als auch die Turbinenaustrittstemperatur $T_{AT}$ und somit indirekt die Turbineneintrittstemperatur $T_{T1}$ geregelt werden. Eine Erhöhung des Volumenstroms des Brennmittels B in die Gasturbine 1 führt zu einer höheren Temperatur des Heißgases H und zu einer Leistungssteigerung der Gasturbine 1. Dazu regelt der Regler 13 das Absperrorgan 8, welches er über seinen Ausgang ansteuert.

Da die Turbineneintrittstemperatur $T_{T1}$ auch von der Temperatur $T_{v1}$ des angesaugten Luftstroms L vor dem Verdichter 3 abhängig ist, wird diese ebenfalls stetig d.h. während der gesamten Betriebsdauer zyklisch wiederkehrend erfasst oder bestimmt.

Mittels des Reglers 13 wird die Abhängigkeit der Turbinenaustrittstemperatur $T_{AT}$ von der Lufttemperatur $T_{v1}$ eliminiert, indem eine korrigierte Turbinenaustrittstemperatur $T_{ATK}$ gemäß

$$T_{ATK} = f_{AK} - k_1 \cdot T_{V1} \qquad \diagup T_{AT} \qquad (1)$$

als Hilfsgröße bestimmt wird. Die korrigierte Turbinenaustrittstemperatur $T_{ATK}$ ist demnach nur vom Brennmitteleinsatz B abhängig, so dass die Gasturbine 1 durch die Regelung der korrigierten Turbinenaustrittstemperatur $T_{ATK}$ als Regelgröße und mit der Einstellung des Volumenstroms des Brennmittels B als Stellgröße leichter geregelt werden kann. Die korrigierte Turbinenaustrittstemperatur $T_{ATK}$ könnte auch anhand einer quadratischen Gleichung oder anhand von anderen Funktionen ermittelt werden.

Der Regler 13 weist einen Eingang auf, an dem der Sollwert $T_{soll}$ der korrigierten Turbinenaustrittstemperatur einstellbar ist. Im Regler 13 erfolgt der Vergleich des Sollwerts $T_{soll}$ mit der bestimmten korrigierte Turbinenaustrittstemperatur $T_{ATK}$. Ist der Istwert, die korrigierte Turbinenaustrittstemperatur $T_{ATK}$ kleiner - größer - als der Sollwert $T_{soll}$, so erhöht - erniedrigt - der Regler 13 über das Absperrorgan 8 die Brennmittelzufuhr.

Wird die Gasturbine 1 ohne das Einbringen einer Flüssigkeit in den Luftstrom L betrieben, so kann mit der vor dem Ansaughaus 11 angeordneten Temperaturmesseinrichtung $M_{LU}$ direkt die am Verdichtereintritt 12 herrschende Temperatur $T_{V1}$ des Luftstroms gemessen werden.

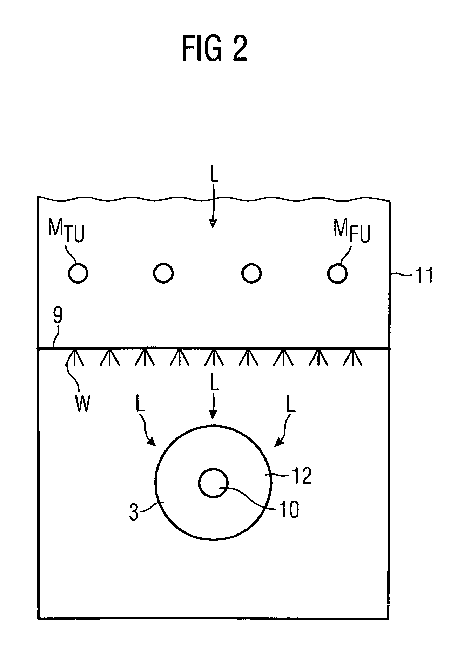

In Fig. 2 ist das Ansaughaus 11 der Gasturbine 1 gezeigt. Die Temperaturmesseinrichtungen $M_{TU}$ sind dabei oberhalb einer Eindüsvorrichtung 9 angeordnet, so dass die eingebrachte Flüssigkeit W die Temperaturmesseinrichtungen $M_{TU}$ und die Luftfeuchte-Messeinrichtungen $M_{FU}$ nicht benetzen.

Beim Wet-Compression-Betrieb wird in den angesaugten Luftstrom L im Ansaughaus 11 über die Eindüsvorrichtung 9 eine Flüssigkeit W, insbesondere Wasser, eingedüst.

Stromaufwärts des Ansaughauses 11 wird die Temperatur $T_U$ der angesaugten Luft mittels der Temperaturmesseinrichtungen $M_{LU}$ und die Luftfeuchte $F_U$ mittels der Luftfeuchte-Messeinrichtungen $M_{FU}$ bestimmt. Deren Ausgänge sind mit den Eingängen des Reglers 13 verbunden.

In Abhängigkeit der gemessenen Werte und in Verbindung anhand von Modellen wird im Regler 13 die zur Regelung nötige am Eintritt 12 des Verdichters 3 herrschende Temperatur $T_{V1}$ bestimmt. Somit kann die Regelung der Gasturbine 1 durch die Regelung der Turbinenaustrittstemperatur $T_{AT}$ unter Anwendung der Gleichung (1) mittels der Menge des eingedüsten Brennmittels B erfolgen.

Ist ein Betrieb der Gasturbine 1 mit dem Eindüsen einer Flüssigkeit W in den vom Verdichter 3 angesaugten Luftstrom L vorgesehen, so sind zwei unterschiedliche Reglungen möglich: die Regelung mit einer theoretischen Evaporierung, die zu einer angenommenen Luftfeuchte von 100% führt, und eine angepassten Regelung mit einer variablen Evaporierung.

Bei der Regelung mit der theoretischen Evaporierung wird angenommen, dass von der eingedüsten Flüssigkeit soviel evaporiert ist, dass es zu einer 100%igen Luftfeuchte im angesaugten Luftstrom L am Verdichtereintritt 12 kommt. Unter dieser Annahme wird anhand der gemessenen Temperatur $T_U$ und Luftfeuchte $F_U$ des Luftstromes L eine minimal erreichbare Temperatur $T_{wetBulb}$ bestimmt, die die Temperatur $T_{V1}$ am Verdichtereintritt 12 ersetzt. Die so bestimmte Verdichtereintrittstemperatur $T_{v1}$ kann rechnerisch als auch aus Diagrammen, die in elektronischer Form in der Messtechnik abgebildet sind oder auch mittels mathematischer Formeln hergeleitet werden. Die Gleichung für den Regler 13 zur Bestimmung der korrigierten Turbinenaustrittstemperatur $T_{ATK}$ lautet dann:

$$T_{ATK} = f_{AK} - k_1 \cdot T_{WetBulb} \qquad \diagup T_{AT} \qquad (2).$$

Da eine Luftfeuchte von 100% im realen Betrieb nie erreicht wird, ist die tatsächliche Temperatur $T_{v1}$ am Eintritt 12 des Verdichters 3 immer größer als die angenommene, minimal erreichbare. Durch die Verwendung der minimal erreichbaren Verdichtereintrittstemperatur $T_{WetBulb}$ wird jeweils eine zu große korrigierte Turbinenaustrittstemperatur $T_{ATK}$ bestimmt, so dass der Regler 13 stets eine zu geringe Menge des Brennmittels B dem Brenner zur Verfügung stellt. Das Überfeuern der Gasturbine 1 wird so verhindert. Demgemäss werden die heißgasbeaufschlagten Komponenten der Gasturbine 1 wie Turbinenschaufeln, Führungsringe, Plattformen und Brennkammerhitzeschilder den bestimmungsgemäßen Temperaturen ausgesetzt und deren vorzeitige Ermüdung verhindert.

Bei der angepassten Regelung der Gasturbine 1 wird eine am Eintritt 12 des Verdichters 3 anstehende Luftfeuchte ermittelt, die jedoch kleiner als 100% ist und die sich in Abhängigkeit der gemessenen Luftfeuchte $F_U$, der gemessenen Temperatur $T_U$ des Luftstromes L und der Menge der durch die Eindüsvorrichtung 9 eingebrachten Flüssigkeit W bestimmen lässt. Zur dessen Berechnung wird der Wirkungsgrad $\eta$ der Verdunstung der Flüssigkeit W im angesaugten Luftstrom L zur Bestimmung der Temperatur $T_{V1}$ am Eintritt 12 des Verdichters 3 mit einbezogen.

Der Wirkungsgrad der Aufsättigung des Luftstroms L mit einer Flüssigkeit W kann gemäß

$$\eta = \frac{T_U - T_{V1}}{T_U - T_{WetBulb}} \tag{3}$$

errechnet werden.

Durch das Auflösen der Gleichung (3) nach $T_{V1}$ und einsetzen in Gleichung (1) erhält man:

$$T_{ATK} = T_{AT} - k_1 \cdot \left[ T_U - \eta \cdot \left( T_U - T_{WetBulb} \right) \right] \tag{4}.$$

Der von der Tröpfchencharakteristik des eingedüsten Wassers sowie der Geometrie, d.h. von der räumlichen Anordnung der Komponenten des Verdichters 3 abhängige Wirkungsgrad η der Evaporierung kann rechnerisch und/ oder durch Versuche ermittelt werden, die dann anhand eines Modells oder eines Diagramm in elektronischer Form im Regler 13 hinterlegt ist.

Eine Evaporierung der Flüssigkeit W, die zu einer geringeren Luftfeuchte am Eintritt 12 des Verdichters 3 führt als 100%, beschreibt die realen Bedingungen besser, so dass eine verbesserte Regelung der Gasturbine 1 erfolgt.

Eine nach Gleichung (4) bestimmte korrigierte Turbinenaustrittstemperatur $T_{ATK}$ ist kleiner als eine nach Gleichung (2) bestimmte korrigierte Turbinenaustrittstemperatur $T_{ATK}$, so dass Leistungsverluste durch eine als zu gering angenommene Turbineneintrittstemperatur $T_{T1}$ vermieden werden.

Ferner kann die Menge an Flüssigkeit W, die vor Eintritt 12 in den Verdichter 3 verdampft, bestimmt werden, die dann zusätzlich über die Eindüsvorrichtung 9 eingedüst wird. Dies führt zu einer weiteren Leistungssteigerung der Gasturbine 1, da lediglich der bei der Verdichtung - also im Verdichter 3 - verdunstende Anteil der Flüssigkeit W zu einer Leistungssteigerung der Gasturbine 1 durch Wet-Compression beiträgt.

**Patentansprüche**

1. Verfahren zur Regelung der Heißgastemperatur eines Heißgases (H) einer Gasturbine (1), insbesondere einer stationären Gasturbine zur Stromerzeugung,
die eine Eindüsvorrichtung (9) zum Eindüsen einer Flüssigkeit (W) in einen von einem Verdichter (3) ansaugbaren Luftstrom (L) aufweist, mit dessen Hilfe ein Brennmittel (B) in einer nachgeordneten Brennkammer (5) unter Bildung des Heißgases (H) verbrennt, das sich anschließend beim Durchströmen des nachgeordneten Turbinenteils (7) entspannt,
mit einer die Temperatur des Luftstroms (L) vor dem Verdichter (3) erfassende Temperaturmesseinrichtung ($M_{TU}$),
wobei die Heißgastemperatur durch die Menge des Brennmittels geregelt wird,
wobei die Temperaturmesseinrichtung ($M_{TU}$) vor der Eindüsvorrichtung (9) angeordnet ist,
**dadurch gekennzeichnet,**
**dass** die Temperatur ($T_{v1}$) des Luftstromes (L) am Eintritt (12) des Verdichters (3) mittels der gemessenen Temperatur ($T_u$) unter Berücksichtigung der Evaporierung der eingedüsten Flüssigkeit (W) im Luftstrom (L) berechnet wird.

2. Verfahren zur Regelung der Heißgastemperatur eines Heißgases (H) einer Gasturbine (1), insbesondere einer stationären Gasturbine zur Stromerzeugung,
die eine Eindüsvorrichtung (9) zum Eindüsen einer Flüssigkeit (W) in einen von einem Verdichter (3) ansaugbaren Luftstrom (L) aufweist, mit dessen Hilfe ein Brennmittel (B) in einer nachgeordneten Brennkammer (5) unter Bildung des Heißgases (H) verbrennt, das sich anschließend beim Durchströmen des nachgeordneten Turbinenteils (7) entspannt,
mit einer die Temperatur des Luftstroms (L) vor dem Verdichter (3) erfassende Temperaturmesseinrichtung ($M_{TU}$),
wobei die Heißgastemperatur durch die Menge des Brennmittels geregelt wird,
wobei die Temperaturmesseinrichtung ($M_{TU}$) vor der Eindüsvorrichtung (9) angeordnet ist,
**dadurch gekennzeichnet,**
**dass** die Temperatur ($T_{v1}$) des Luftstromes (L) am Eintritt (12) des Verdichters (3) zu einer minimal möglichen Temperatur ($T_{wetBulb}$) bestimmt wird, bei der eine derart große Evaporierung angenommen wird, dass am Eintritt (12) des Verdichter (3) eine 100%-ige Luftfeuchte ($F_U$) herrscht.

3. Verfahren nach einem der Ansprüche 1, oder 2,
**dadurch gekennzeichnet,**

**dass** die Heißgastemperatur am Austritt (6) des Turbinenteils (7) erfasst wird.

4. Verfahren nach einem der Ansprüche 1 bis 3,
**dadurch gekennzeichnet,**
**dass** vor der Eindüsvorrichtung (9) mittels Luftfeuchte-Messeinrichtungen ($M_{FU}$) die Feuchte ($F_u$) des Luftstroms (L) bestimmbar ist.

5. Verfahren nach einem der Ansprüche 1 bis 4,
**dadurch gekennzeichnet,**
**dass** die Menge der eingedüsten Flüssigkeit (W) in den Luftstrom (L) in Abhängigkeit der Evaporierung geändert wird.

6. Verfahren nach einem der Ansprüche 1 bis 5,
**dadurch gekennzeichnet,**
**dass** die Flüssigkeit Wasser, insbesondere destilliertes Wasser ist.

7. Verfahren nach einem der Ansprüche 1 bis 6,
**dadurch gekennzeichnet,**
**dass** die Temperatur ($T_{v1}$) mittels einer Funktion anhand von Temperatur- und Feuchteverteilungen berechnet wird.

8. Verfahren nach einem der Ansprüche 1 bis 7,
**dadurch gekennzeichnet,**
**dass** die Funktionen in Form von Diagrammen vorgebbar sind.

**Claims**

1. Method for controlling the hot-gas temperature of a hot gas (H) in a gas turbine (1), in particular a stationary gas turbine for power generation,
which has an injection apparatus (9) for injecting a liquid (W) into an air stream (L) that can be sucked in by a compressor (3), with the aid of which air stream a fuel (B) is burnt in a downstream combustion chamber (5) to form the hot gas (H) which then expands as it flows through the downstream turbine part (7),
having a temperature-measuring device ($M_{TU}$) which records the temperature of the air stream (L) upstream of the compressor (3), the hot-gas temperature being controlled by the quantity of the fuel,
the temperature-measuring device ($M_{TU}$) being arranged upstream of the injection apparatus (9), **characterized in that** the temperature ($T_{v1}$) of the air stream (L) at the inlet (12) of the compressor (3) is calculated by means of the measured temperature ($T_u$) taking into account the evaporation of the injected liquid (W) in the air stream (L).

2. Method for controlling the hot- gas temperature of a hot gas (H) in a gas turbine (1), in particular a stationary gas turbine for power generation,
which has an injection apparatus (9) for injecting a liquid (W) into an air stream (L) that can be sucked in by a compressor (3), with the aid of which air stream a fuel (B) is burnt in a downstream combustion chamber (5) to form a hot gas (H) which then expands as it flows through the downstream turbine part (7),
having a temperature- measuring device ($M_{TU}$) which records the temperature of the air stream (L) upstream of the compressor (3), the hot- gas temperature being controlled by the quantity of the fuel,
the temperature- measuring device ($M_{TU}$) being arranged upstream of the injection apparatus (9),
**characterized**
**in that** the temperature ($T_{V1}$) of the air stream (L) at the inlet (12) of the compressor (3) is determined at a minimum possible temperature ($T_{wetBulb}$) at which it is assumed there is sufficient evaporation for a 100% air humidity ($F_U$) to be present at the inlet (12) of the compressor (3) .

3. Method according to one of Claims 1 or 2, **characterized in that** the hot-gas temperature is recorded at the outlet (6) of the turbine part (7).

4. Method according to one of Claims 1 to 3, **characterized in that** the humidity ($F_u$) of the air stream (L) can be determined upstream of the injection apparatus (9) by means of air-humidity-measuring devices ($M_{FU}$).

5. Method according to one of Claims 1 to 4, **characterized in that** the quantity of liquid (W) injected into the air stream (L) is altered as a function of the evaporation.

**6.** Method according to one of Claims 1 to 5, **characterized in that** the liquid is water, in particular distilled water.

**7.** Method according to one of Claims 1 to 6, **characterized in that** the temperature ($T_{V1}$) is calculated by means of a function on the basis of temperature and humidity distributions.

**8.** Method according to one of Claims 1 to 7, **characterized in that** the functions can be predetermined in the form of diagrams.


**Revendications**

**1.** Procédé de régulation de la température d'un gaz ( H ) chaud d'une turbine ( 1 ) à gaz, notamment d'une turbine à gaz fixe pour la production de courant électrique, qui a un dispositif (9) d'injection pour l'injection d'un liquide ( W ) dans un courant ( L ) d'air pouvant être aspiré par un compresseur ( 3 ), à l'aide duquel un agent ( B ) combustible brûle dans une chambre de combustion ( 5 ) en aval avec formation du gaz (H) chaud, qui se détend ensuite lorsqu'il passe dans la partie (7) en aval de la turbine,
comprenant un dispositif ($M_{TU}$), de mesure de la température repérant la température du courant ( L ) d'air avant le compresseur ( 3 ), la température du gaz chaud étant réglée par la quantité de l'agent combustible,
dans lequel le dispositif ($M_{TU}$) de mesure de la température est monté avant le dispositif ( 9 ) d'injection,
**caractérisé en ce que**
la température ( $T_{V1}$ ) du courant (L) d'air à l'entrée ( 12 ) du compresseur ( 3 ) est calculée au moyen de la température ( $M_{TU}$ ) mesurée en tenant compte de l'évaporation du liquide (W) injecté dans le courant (L) d'air.

**2.** Procédé de régulation de la température d'un gaz ( H ) chaud d'une turbine ( 1 ) à gaz, notamment d'une turbine à gaz fixe pour la production de courant électrique, qui a un dispositif (9) d'injection pour l'injection d'un liquide (W) dans un courant (L) d'air pouvant être aspiré par un compresseur ( 3 ), à l'aide duquel un agent ( B ) combustible brûle dans une chambre de combustion ( 5 ) en aval avec formation du gaz (H) chaud, qui se détend ensuite lorsqu'il passe dans la partie (7) en aval de la turbine,
comprenant un dispositif ( $M_{TU}$ ), de mesure de la température repérant la température du courant ( L ) d'air avant le compresseur ( 3 ), la température du gaz chaud étant réglée par la quantité de l'agent combustible,
dans lequel le dispositif ( $M_{TU}$ ) de mesure de la température est monté avant le dispositif ( 9 ) d'injection,
**caractérisé en ce que**
la température ( $T_{V1}$ ) du courant (L) d'air à l'entrée ( 12 ) du compresseur (3) est déterminée à une température ( $T_{wetBulb}$ ) minimum possible pour laquelle on suppose une grande évaporation, de manière à ce qu'il règne une humidité ( $F_u$ ) de l'air à 100% à l'entrée ( 12 ) du compresseur ( 3 ) .

**3.** Procédé suivant l'une des revendications 1 ou 2,
**caractérisé en ce que**
la température du gaz chaud est repérée à la sortie ( 6 ) de la partie ( 7 ) de la turbine.

**4.** Procédé suivant l'une des revendications de 1 à 3,
**caractérisé en ce que**
l'humidité ( $F_u$ ) du courant ( L ) d'air peut être déterminée avant le dispositif ( 9 ) d'injection au moyen de dispositifs ( $M_{FU}$ ) de mesure de l'humidité de l'air.

**5.** Procédé suivant l'une des revendications 1 à 4,
**caractérisé en ce**
**que** la quantité du liquide (W) injecté dans le courant ( L ) d'air est modifié en fonction de l'évaporation.

**6.** Procédé suivant l'une des revendications 1 à 5,
**caractérisé par** ce que
le liquide est de l'eau, notamment de l'eau distillée.

**7.** Procédé suivant l'une des revendications de 1 à 6,
**caractérisé en ce que**
la température ( $T_{V1}$ ) est calculée au moyen d'une fonction à l'aide de répartition de température et d'humidité.

**8.** Procédé suivant l'une des revendications de 1 à 7,

**caractérisé en ce que**
les fonctions peuvent être données sous la forme de graphiques.

# FIG 1

EP 1 462 633 B1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002083712 A1